# FASCICULE DE BREVET EUROPEEN

(11) **EP 0 863 108 B1**
(45) Date de publication et mention de la délivrance du brevet: **22.01.2003**
(21) Numéro de dépôt: 98400483.8
(22) Date de dépôt: 02.03.1998
(51) Int. Cl.: C01B 33/12, C03C 1/02, C03B 19/01, C03B 37/012

(54) **Procédé pour purifier de la silice naturelle ou synthétique et application au dépôt de silice purifiée sur une préforme de fibre optique**
Verfahren zur Reinigung von natürlichen oder synthetischen Kieselsäureteilchen und Abscheidung der gereinigten Kieselsäureteilchen auf einer Glasfaservorform
Process for purifying natural or synthetic silica and depositing purified silica on an optical fibre preform

(30) Priorité: 06.03.1997 FR 9703519
(43) Date de publication de la demande: 09.09.1998
(73) Titulaire: ALCATEL, 75008 Paris (FR)
(72) Inventeur: Drouart, Alain, 92000 Nanterre (FR); Gouez, Benoit, 78260 Acheres (FR); Lumineau, Yves, 95220 Herblay (FR); Ripoche, Pierre, 45300 Pithiviers (FR); Campion, Jean-Florent, 92270 Bois-Colombes (FR)
(74) Mandataire: Laroche, Danièle

(56) Documents cités:
- EP-A- 0 360 479
- DE-A- 3 434 598
- FR-A- 2 446 264
- US-A- 3 361 525
- US-A- 4 145 187
- US-A- 4 402 720
- US-A- 4 983 370

## Description

L'invention concerne un procédé pour purifier de la silice naturelle ou synthétique, et l'application de ce procédé pour déposer de la silice naturelle ou synthétique purifiée sur une préforme de fibre optique, dans lequel une préforme, sensiblement cylindrique et s'étendant dans une direction longitudinale, est mise en rotation sur elle même devant un plasma ou une flamme, qui se déplace en un mouvement de va et vient sensiblement perpendiculairement à la direction longitudinale de la préforme, et dans lequel un premier conduit d'alimentation nourrit le plasma ou la flamme en grains de silice naturelle ou synthétique.

D'une manière connue, une préforme est obtenue à partir d'un dépôt chimique en phase vapeur, réalisé à l'intérieur d'un tube monté sur un tour verrier, et auquel succède une opération de rétreint pour former une forme pleine.

Pour les fibres mulitmodes, l'élaboration de préformes est suffisante. En revanche, pour les fibres monomodes, il est avantageux d'ajouter de la matière à la préforme, en général de la silice naturelle ou synthétique, afin d'augmenter son diamètre, et d'obtenir, lors du fibrage, une fibre continue de plusieurs dizaines de kilomètres.

L'apport de matière à la préforme est réalisé au moyen d'une torche à plasma. La préforme, qui a une forme cylindrique, est mise en rotation sur elle même devant la torche dont le plasma est nourri en grains de silice. Les grains sont fondus, puis déposés et vitrifiés sur la préforme. Plusieurs passes sont effectuées pour atteindre le diamètre souhaité.

Le dépôt de silice naturelle ou synthétique présente un inconvénient majeur. Des éléments alcalins comme le Sodium ou le Lithium, sont présents en proportion non négligeable dans ce type de matériaux, et se retrouvent présents dans les grains déposés, où ils favorisent la formation de liaisons entre le groupement OH et les éléments dopants, comme le Germanium Ge. Ces liaisons absorbent certaines longueurs d'onde, et augmentent les pertes par atténuation de la fibre optique à ces longueurs d'onde.

Le but de l'invention est de fournir un procédé pour purifier de la silice naturelle ou synthétique.

A cet effet, l'invention a pour objet un procédé pour purifier de la silice naturelle ou synthétique dans lequel, un plasma issu d'un moyen d'apport d'énergie calorifique, est nourri par un premier conduit d'alimentation, en grains de silice naturelle ou synthétique, caractérisé en ce qu'un deuxième conduit d'alimentation nourrit le plasma en un composé fluoré ou chloré, de préférence fluoré, mélangé à un gaz porteur, les conditions d'alimentation des deux conduits étant réglées pour faire réagir des éléments alcalins ou alcalino-terreux contenus dans les grains de silice naturelle ou synthétique, avec le fluor ou le chlore, de préférence le fluor, du composé fluoré ou chloré, de préférence fluoré.

Le but de l'invention est également d'appliquer le procédé pour purifier de la silice naturelle ou synthétique, au dépôt de silice naturelle ou synthétique sur une préforme de fibre optique, le dépôt ne contenant qu'une très faible quantité d'éléments alcalins ou alcalino-terreux.

A cet effet, l'invention fournit également un procédé pour déposer de la silice naturelle ou synthétique sur une préforme de fibre optique, dans lequel une préforme, sensiblement cylindrique et s'étendant dans une direction longitudinale, est mise en rotation sur elle même devant un plasma issu d'un moyen d'apport d'énergie calorifique, qui se déplace en un. mouvement de va et vient sensiblement perpendiculairement à la direction longitudinale de la préforme, et dans lequel un premier conduit d'alimentation nourrit le plasma en grains de silice naturelle ou synthétique, caractérisé en ce qu'un deuxième conduit d'alimentation nourrit le plasma ou la flamme en un composé fluoré ou chloré, de préférence fluoré, mélangé à un gaz porteur, les conditions d'alimentation des deux conduits étant réglées pour faire réagir des d'éléments alcalins ou alcalino-terreux contenus dans les grains de silice naturelle ou synthétique, avec le fluor ou le chlore, de préférence le fluor, du composé fluoré ou chloré, de préférence fluoré.

Le plasma est le siège d'une réaction chimique où les grains de silice fondus réagissent avec le composé fluoré ou chloré du gaz porteur. Avantageusement, la température du plasma peut être ajustée pour obtenir un rendement élevé de la réaction, compte tenu des débits des conduits d'alimentation de la silice naturelle ou synthétique et du gaz porteur. Une température plus élevée permet de maintenir un bon rendement de réaction tout en augmentant les débits des conduits d'alimentation.

D'une façon également avantageuse, il est possible de régler la teneur en composé fluoré ou chloré, de préférence fluoré, du gaz porteur, en fonction de la taille moyenne des grains de silice naturelle ou synthétique. Des grains plus petits permettent de maintenir un bon rendement de réaction avec un gaz porteur moins riche en composé fluoré ou chloré, de préférence fluoré.

L'élimination des alcalins dans le dépôt de la silice naturelle ou synthétique permet de recharger la préforme de la fibre optique avec un matériau de départ beaucoup plus économique, surtout dans le cas où la silice est naturelle, que la silice synthétique à très haute pureté, dont le prix de revient environ 5 à 10 fois plus élevé. Le surcoût du traitement chimique reste proportionnellement faible. La qualité de transmission optique de la fibre issue de la préforme rechargée avec de la silice naturelle ou synthétique, traitée par un composé fluoré ou chloré, de préférence fluoré, est comparable à celle d'une fibre obtenue par recharge de silice synthétique à très haute pureté, et améliorée par rapport à celle d'une fibre issue d'une préforme rechargée avec de la silice naturelle ou synthétique, et non traitée par un composé fluoré ou chloré.

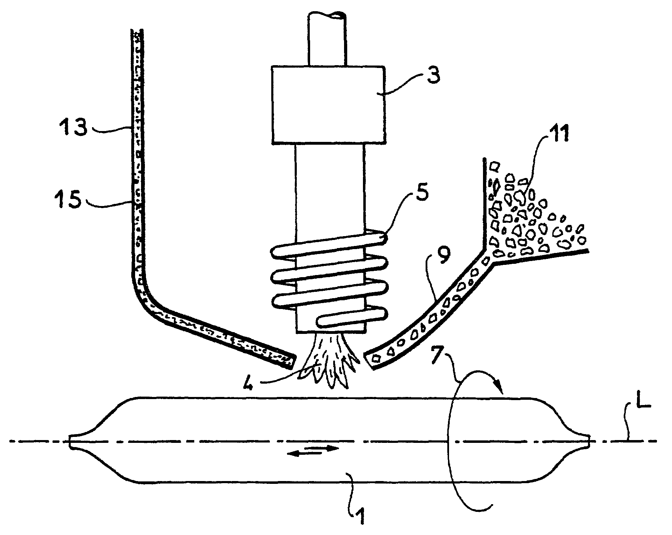

D'autres caractéristiques et avantages de l'invention apparaîtront à la lecture de la description d'un exemple illustré par la figure unique, qui montre de façon schématique les éléments qui sont mis en oeuvre lors de l'application du procédé de purification de silice naturelle ou synthétique au dépôt sur une préforme de fibre optique.

Le procédé de purification de silice naturelle ou synthétique permet de déposer sur une préforme de fibre optique, une ou plusieurs couches de silice naturelle ou synthétique ne contenant qu'une quantité négligeable d'éléments alcalins, tels le Sodium ou le Lithium, ou alcalino-terreux. L'opération de dépôt, appelée aussi recharge, sert à augmenter le diamètre d'une préforme, pour permettre de tirer par fibrage une fibre continue longue de plusieurs dizaines de kilomètres.

Sur la figure, le procédé comprend une torche à plasma 3 comprenant des éléments électriques d'induction 5. Une préforme 1 se présentant sous la forme d'un cylindre s'étendant dans une direction longitudinale L, est mise en rotation sur elle même, comme indiqué par la flèche 7. La torche à plasma 3 se déplace en un mouvement de va et vient sensiblement perpendiculaire à la direction longitudinale L de la préforme. La rotation de la préforme est assurée par un tour verrier non représenté. Les mandrins du tour actionnent deux tiges de verre, soudées aux deux extrémités de la préforme. Le tour est placé dans une cabine close qui assure la protection contre les rayonnements électromagnétiques, et contre les dégagements gazeux issus de la réaction chimique.

Un premier conduit d'alimentation 9 apporte dans le plasma des grains de silice naturelle ou synthétique 11. Ces grains résultent, par exemple, du broyage de blocs grossiers de quartz naturel ou de cristal de roche. L'alimentation s'effectue simplement par gravité. Une vanne non représentée, est placée à l'extérieur de la cabine pour permettre de régler le débit d'alimentation.

Un deuxième conduit d'alimentation 13 nourrit le plasma en un gaz 15 qui transporte une proportion donnée de composé fluoré ou chloré, de préférence fluoré. De préférence, le gaz porteur est l'air. Le composé fluoré est, par exemple, l'hexafluorure de soufre SF₆, ou un fréon choisi parmi ceux autorisés par la réglementation européenne, tel que C₂F₆. Le composé chloré est, par exemple, le chlore Cl₂. Une vanne reliée à une armoire à gaz placée à l'extérieur de la cabine, permet de régler le débit du gaz porteur. Une autre vanne reliée à l'armoire à gaz permet de régler la proportion de composé fluoré ou chloré dans le gaz porteur. Le gaz porteur peut être composé uniquement du composé fluoré ou chloré, de préférence fluoré, à l'état pur.

Le plasma est le siège d'un réaction chimique entre les grains de silice naturelle ou synthétique et le composé fluoré ou chloré, de préférence fluoré. La température du plasma comprise entre 5000°C et 10000°C, entraîne la fusion des grains de silice naturelle ou synthétique. Les composés fluorés ou chlorés réagissent avec les alcalins tels le Sodium ou le Lithium présents dans la silice naturelle ou synthétique, et donnent lieu à un dégagement gazeux de fluorure NαF ou LiF, ou de chlorure NaCI ou LiCI.

Un bon rendement de la réaction est obtenu dans les conditions opératoires suivantes :

| | |
|---|---|
| puissance du plasma | 40 - 100 kW |
| débit de la silice naturelle ou synthétique | 0,2 - 5 kg/heure |
| taille moyenne des grains | 50 - 600 µm |
| débit du gaz porteur | 0 - 15 litre/mn |
| proportion de composé fluoré dans le gaz porteur | 0,3 - 100 % |

## Revendications

1. Un procédé pour déposer de la silice naturelle ou synthétique sur une préforme de fibre optique, dans lequel une préforme (1), sensiblement cylindrique et s'étendant dans une direction longitudinale (L), est mise en rotation (7) sur elle même devant un plasma (4), issu d'un moyen d'apport d'énergie calorifique (3), qui se déplace en un mouvement de va et vient sensiblement perpendiculairement à la direction longitudinale (L) de la préforme (1), et dans lequel un premier conduit d'alimentation (9) nourrit le plasma en grains de silice naturelle ou synthétique (11), **caractérisé en ce qu'**un deuxième conduit d'alimentation (13) nourrit le plasma en un composé fluoré ou chloré mélangé à un gaz porteur (15), les conditions d'alimentation des deux conduits (9,13) étant réglées pour faire réagir des éléments alcalins ou alcalino-terreux contenus dans les grains de silice naturelle ou synthétique (11), avec le Fluor ou le Chlore du composé fluoré ou chloré.

2. Procédé selon la revendication 2, **caractérisé en ce que** le composé fluoré ou chloré est fluoré.

3. Le procédé selon l'une des revendications 1 à 2, dans lequel le moyen d'apport d'énergie calorifique (3) crée une température comprise entre 5000°C et 10000°C.

## Patentansprüche

1. Verfahren zum Abscheiden von natürlicher oder synthetischer Kieselsäure auf eine Vorform einer optischen Faser. bei welchem eine im wesentlichen zylindrische und in eine Längsrichtung (L) verlaufende Vorform (1) vor einem Plasma (4), das von einem Mittel zum Zuführen von Wärmeenergie (3) stammt, welches in eine zur Längsrichtung (L) der Vorform (1) im wesentlichen senkrechte Hin- und Herbewegung versetzt wird, in Drehung (7) um sich selbst versetzt wird, und bei welchem ein erster Speisungsgang (9) das Plasma mit natürlichen oder synthetischen Kieselsäureteilchen (11) speist, **dadurch gekennzeichnet, dass** ein zweiter Speisungsgang (13) das Plasma mit einer mit einem Trägergas (15) gemischten fluorierten oder chlorierten Verbindung speist, wobei die Bedingungen der Speisung der beiden Gänge (9, 13) geregelt sind, um die in den natürlichen oder synthetischen Kieselsäureteilchen (11) enthaltenen alkalischen oder erdalkalischen Elemente mit dem Fluor oder dem Chlor der fluorierten oder chlorierten Verbindung reagieren zu lassen.

2. Verfahren nach Anspruch 2, **dadurch gekennzeichnet, dass** die fluorierte oder chlorierte Verbindung fluoriert ist.

3. Verfahren nach einem der Ansprüche 1 bis 2, bei welchem das Mittel zum Zuführen von Wärmeenergie (3) eine Temperatur erzeugt. die zwischen 5000°C und 10 000°C liegt.

## Claims

1. A method of depositing natural or synthetic silica on an optical fiber preform, in which a substantially cylindrical preform (1) extending in a longitudinal direction (L) is set into rotation (7) about its axis in front of a plasma (4) coming from a heat energy supply means (3) which moves back and forth substantially parallel to the longitudinal direction (L) of the preform (1), and in which a first feed duct (9) feeds the plasma with grains of natural or synthetic silica (11), the method being **characterized in that** a second feed duct (13) feeds the plasma with a fluorine or chlorine compound mixed with a carrier gas (15), the feed conditions of the two ducts (9, 13) being adjusted to cause alkali or alkaline-earth elements contained in the grains of natural or synthetic silica (11) to react with the fluorine or the chlorine of the fluorine or chlorine compound.

2. A method according to claim 1, **characterized in that** the fluorine or chlorine compound is a fluorine compound.

3. The method according to claim 1 or claim 2, in which the heat energy supply means (3) creates a temperature lying in the range 5000°C to 10,000°C.
